# EUROPÄISCHE PATENTANMELDUNG

(11) **EP 1 095 971 A1**
(43) Veröffentlichungstag der Anmeldung: **02.05.2001**
(21) Anmeldenummer: 00120601.0
(22) Anmeldetag: 21.09.2000
(51) Int. Cl.: C08J 9/18, C08L 23/02

(54) **Verfahren zur Herstellung von expandierten Polyolefin-Partikeln**

(30) Priorität: 27.10.1999 DE 19951649
(71) Anmelder: BASF AKTIENGESELLSCHAFT, 67056 Ludwigshafen (DE)
(72) Erfinder: Braun, Frank, Dr., 67063 Ludwigshafen (DE)

(57) **Zusammenfassung**

Die Erfindung betrifft ein Verfahren zur Herstellung von expandierten Polyolefin-Partikeln durch Imprägnieren von Polyolefin-Granulat mit einem flüchtigen Treibmittel in Suspension unter Druck und anschließendem Entspannen. Als Suspendierhilfsmittel wird eine Mischung aus einer wasserunlöslichen anorganischen Verbindung und einem nichtionischen Tensid eingesetzt.

## Beschreibung

Die Erfindung betrifft ein Verfahren zur Herstellung von expandierten Polyolefin (EPO)-Partikeln durch Imprägnieren von Polyolefin-Granulat mit einem flüchtigen Treibmittel in Suspension unter Druck bei erhöhter Temperatur.

Das genannte Verfahren ist an sich bekannt und wird in großtechnischem Maßstab betrieben. Nach EP-A 53 333, EP-A 123 144 und DE-A 34 31 245 werden als Treibmittel organische Verbindungen, wie Halogenkohlenwasserstoffe, z.B. Dichlordifluormethan, oder Kohlenwasserstoffe, z.B. Butan eingesetzt. Das Suspensionsmedium ist Wasser, es kann auch im Gemisch mit Alkoholen angewandt werden. Stets enthält die Suspension ein Suspendierhilfsmittel, welches verhindern soll, daß das Polyolefingranulat in der Suspension zusammenbackt bzw. agglomeriert. Geeignete Suspensionsstabilisatoren sind wasserunlösliche anorganische Verbindungen, wie Erdalkalimetallcarbonate, -phosphate oder -oxide, die zusammen mit einem anionischen Tensid, z.B. einem Sulfonat, eingesetzt werden. Diese Tenside bilden jedoch in der gerührten Suspension sehr viel Schaum, der beim Handling der Partikel während und nach der Imprägnierung stört. Ferner kann es zu einer Umsetzung der Erdalkaliverbindungen mit dem anionischen Tensid kommen, bei der dieses als schwerlösliches Erdalkalisalz ausgefällt wird und somit unwirksam wird. Dadurch wird der Suspensionsansatz instabil und es kann zu Verklebungen der Partikel kommen.

Der Erfindung lag daher die Aufgabe zugrunde, diese Erscheinungen zu vermeiden. Diese Aufgabe wird erfindungsgemäß durch Einsatz von nichtionischen Tensiden gelöst.

Gegenstand der Erfindung ist daher ein Verfahren zur Herstellung von EPO-Partikeln durch Imprägnieren von Polyolefin-Granulat mit einem flüchtigen Treibmittel in wäßriger Suspension in Gegenwart einer wasserunlöslichen anorganischen Verbindung in Kombination mit einem Tensid als Suspendierhilfsmittel bei erhöhter Temperatur unter Druck und anschließendem Entspannen, wobei als Tensid ein nichtionisches Tensid mit einem hydrophilen und einem hydrophoben Molekülteil, gegebenenfalls zusammen mit untergeordneten Mengen eines anionischen Tensids, eingesetzt wird.

Polyolefine im Sinne der vorliegenden Erfindung sind
a) Homopolypropylen,
b) Randomcopolymere des Propylens mit 0,1 bis 15. vorzugsweise 0,5 bis 12 Gew.-% Ethylen und/oder einem C₄-C₁₀-α-Olefin, vorzugsweise ein Copolymer von Propylen mit 0,5 bis 6 Gew.-% Ethylen oder mit 0,5 bis 15 Gew.-% Buten-1 oder ein Terpolymer aus Propylen, 0,5 bis 6 Gew.-% Ethylen und 0,5 bis 6 Gew.-% Buten-1, oder
c) Mischung von a) oder b) mit 0,1 bis 75, vorzugsweise 3 bis 50 Gew.-% eines Polyolefin-Elastomeren, z.B. eines Ethylen/Propylen-Blockcopolymeren mit 30 bis 70 Gew.-% Propylen.
d) Polyethylen (PE-LLD, -LD, -MD, -HD) und
e) Mischung aus den unter a) bis d) genannten Polyolefinen (gegebenenfalls nach Zugabe von Phasenvermittlern).

Bevorzugt sind Homo- und Copolymere des Propylens mit bis zu 15 Gew.-%, insbesondere 1 bis 5 Gew.-% Ethylen und/oder Buten-1.

Der Kristallitschmelzpunkt (DSC-Maximum) der unter a) bis e) aufgelisteten Polyolefine liegt im allgemeinen zwischen 90 und 170°C. Ihre Schmelzwärme, bestimmt nach der DSC-Methode, liegt vorzugsweise zwischen 20 und 300 J/g, der Schmelzindex MFI (230°C, 2,16 kp für Propylenpolymerisate und 190°C, 2,16 kp für Ethylenpolymerisate) nach DIN 53 735 zwischen 0,1 und 100 g/10 min.

Bei der Herstellung der EPO-Partikel geht man von Polyolefingranulat aus, welches vorzugsweise mittlere Durchmesser von 0,2 bis 10, insbesondere 0,5 bis 5 mm aufweist. In einem Rührreaktor werden 100 Gew. -Teile dieses Granulats in 100 bis 500 Gew. -Teilen des Suspendiermediums dispergiert. Bevorzugtes Suspendiermedium ist Wasser, es kann auch im Gemisch mit organischen Flüssigkeiten, wie z.B. Ethanol und Methanol, angewandt werden. Das Suspendiermedium enthält Suspendierhilfsmittel, vorzugsweise in Mengen von 0,01 bis 10, insbesondere von 0,1 bis 10 und besonders bevorzugt von 0,5 bis 8 Gew.-%, bezogen auf das Polyolefin-Granulat. Als wasserunlösliche anorganische Verbindung wird ein feinteiliges Metalloxid, -carbonat oder -phosphat eingesetzt, besonders bevorzugt sind Tricalciumphosphat, Calciumcarbonat, Magnesiumpyrophosphat, Aluminiumoxid, Zinkcarbonat, Magnesiumcarbonat, Titandioxid oder Kieselerde. Erfindungsgemäß wird diese wasserunlösliche Verbindung in Kombination mit einem nichtionischen Tensid eingesetzt, welches einen hydrophilen und einen hydrophoben Molekülteil aufweist, deren Kettenlängen in weiten Grenzen variiert werden können. Geeignete nichtionische Tenside sind in "Ullmann's Encyclopedia of Industrial Chemistry, Sixth Editon, Topic: Surfactants" beschrieben. Bevorzugt sind Ethoxylate von Fettalkoholen, Oxoalkoholen, Alkylphenolen, Aminen oder Amiden, sowie Copolymere von Ethylenoxid und Propylenoxid. Sie können zusammen mit untergeordneten Mengen, vorzugsweise mit 1 bis 50 % ihres Gewichts, an anionischen Tensiden, z.B. Sulfonaten, wie Natriumalkylbenzolsulfonaten, eingesetzt werden. Bevorzugt werden aber keine anionischen Tenside zugesetzt. Das Gewichtsverhältnis von wasserunlöslicher anorganischer Verbindung zu dem Tensid kann in weiten Grenzen zwischen 20000 : 1 und 1 : 1 schwanken, vorzugsweise zwischen 10000 : 1 und 5 : 1. Die Tenside können zu jedem Zeitpunkt der Imprägnierung direkt in die Suspension gegeben werden. Sie können auch durch Extrusion in das Polymergranulat eingearbeitet werden und dann während der Imprägnierung durch Ausdiffundieren in das Suspendiermedium gelangen.

Als Treibmittel können entweder organische Flüssigkeiten oder anorganische Gase oder Gemische davon eingesetzt werden. Als Flüssigkeiten kommen halogenierte Kohlenwasserstoffe in Frage, bevorzugt sind jedoch gesättigte, aliphatische Kohlenwasserstoffe, insbesondere solche mit 3 bis 8 Kohlenstoffatomen. Besonders bevorzugt ist n-Butan. Geeignete anorganische Gase sind Stickstoff, Luft, Ammoniak und Kohlendioxid.

Das Treibmittel wird in Mengen von vorzugsweise 1 bis 50 Gew.-Teilen, insbesondere 3 bis 30 Gew.-Teilen, bezogen auf 100 Gew.-Teile Polymer, eingesetzt. Die Treibmittelzugabe kann dabei vor oder während des Aufheizens des Reaktorinhalts erfolgen.

Die Treibmittelzugabe kann vor oder während des Aufheizens des Reaktorinhalts auf die Entspannungstemperatur erfolgen. Diese sollte 40°C unter bis 20°C über dem Kristallitschmelzpunkt des Polyolefins liegen. Bei den bevorzugten Propylenpolymerisaten arbeitet man bei 110°C bis 180°C, insbesondere bei 120°C bis 160°C.

Je nach Menge und Art des Treibmittels sowie nach der Höhe der Temperatur stellt sich im Reaktor ein Druck ein, der im allgemeinen zwischen 2 und 100 bar liegt.

Durch die Wahl der Imprägniertemperatur und des Treibmittels kann die Schüttdichte der entstandenen EPO-Partikel gesteuert werden. Nach Erreichen der Entspannungstemperatur wird der Reaktor entspannt, wobei die Entspannung zweckmäßigerweise in einen Zwischenbehälter erfolgt, in dem ein Druck von vorzugsweise 0,5 bis 5 bar herrscht.

Beim Entspannen des Reaktors erfolgt eine Expansion des treibmittelhaltigen Polyolefin-Granulats und es entstehen EPO-Partikel mit einem mittleren Durchmesser von 1 bis 20 mm.

Die EPO-Partikel werden von der wäßrigen Lösung, welche die Hauptmenge des Treibmittels gelöst enthält, abgetrennt, gewaschen und getrocknet.

Die Schüttdichte der EPO-Partikel liegt zwischen 10 und 300, insbesondere zwischen 40 und 150 g/l. Die EPO-Partikel sind überwiegend geschlossenzellig und besitzen eine Zellzahl von 1 bis 5000 Zellen/mm², vorzugsweise 2 bis 3000 Zellen/mm², insbesondere 10 bis 2500 Zellen/mm².

Die EPO-Partikel können nach üblichen Verfahren mit Wasserdampf oder Heißluft zu Schaumstoff-Formteilen verschweißt werden, welche in der Automobil-, Verpackungs- und Freizeitindustrie Anwendung finden.

### Beispiel

In einem geschlossenen Rührreaktor werden 2000 Teile eines Propylen-Ethylen-Randomcopolymeren mit einem Ethylengehalt von ca. 2 Gew.-%, 90 Teile Calciumcarbonat und 1 Teil eines Blockcopolymeren aus Ethylenoxid und Propylenoxid (Molmasse 8000 g/mol, 80 % Ethylenanteil) in 5000 Teilen Wasser dispergiert. Nach Zugabe von 500 Teilen Butan wird der Reaktor auf ca. 130°C aufgeheizt. Dabei steigt der Druck auf ca. 20 bar an. Anschließend wird der Inhalt des Reaktors in einen Zwischenbehälter entspannt. Nach Entfernen des Calciumcarbonats und Trocknung haben die erhaltenen Schaumpartikel eine Schüttdichte von 18 g/l. Es gibt während dieser Aufarbeitung keine Probleme bzgl. Schaumbildung oder verklebter Partikel.

## Patentansprüche

1. Verfahren zur Herstellung von expandierten Polyolefin-(EPO-)Partikeln durch Imprägnieren von Polyolefin-Granulat mit einem flüchtigen Treibmittel in wäßriger Suspension in Gegenwart einer wasserunlöslichen anorganischen Verbindung in Kombination mit einem Tensid als Suspendierhilfsmittel bei erhöhter Temperatur unter Druck und anschließendem Entspannen, dadurch gekennzeichnet, daß als Tensid ein nichtionisches Tensid mit einem hydrophilen und einem hydrophoben Molekülteil, gegebenenfalls zusammen mit untergeordneten Mengen eines anionischen Tensids, eingesetzt wird.

2. Verfahren nach Anspruch 1, dadurch gekennzeichnet, daß die Suspendierhilfsmittel in Mengen von 0,01 bis 10 Gew.-%, vorzugsweise von 0,5 bis 8 Gew.-%, bezogen auf das Polyolefin-Granulat, eingesetzt wird.

3. Verfahren nach Anspruch 1, dadurch gekennzeichnet, daß das nichtionische Tensid ein Fettalkoholethoxylat, ein Ethoxylat eines Oxoalkohols, eines Amins oder Amids, ein Alkylphenolethoxylat oder ein Copolymer aus Ethylenoxid und Propylenoxid ist.

4. Verfahren nach Anspruch 1, dadurch gekennzeichnet, daß die wasserunlösliche anorganische Verbindung ein feinteiliges Metalloxid, -carbonat oder -phosphat ist.

5. Verfahren nach Anspruch 4, dadurch gekennzeichnet, daß die wasserunlösliche anorganische Verbindung Tricalciumphosphat, Calciumcarbonat, Magnesiumpyrophosphat, Aluminiumoxid, Zinkcarbonat, Magnesiumcarbonat, Titandioxid oder Kieselerde ist.

6. Verfahren nach Anspruch 1, dadurch gekennzeichnet, daß das Gewichtsverhältnis von wasserunlöslicher anorganischer Verbindung zu dem Tensid 10000 : 1 bis 5 : 1 beträgt.
